# EUROPÄISCHE PATENTANMELDUNG

(11) **EP 3 115 582 A1**
(43) Veröffentlichungstag der Anmeldung: **11.01.2017**
(21) Anmeldenummer: 16177923.6
(22) Anmeldetag: 05.07.2016
(51) Int. Cl.: F02D 41/00, F02D 19/06, F15B 7/00, F16K 31/126, F16K 31/165, F02D 41/20, F02D 41/38

(54) **DIREKTEINSPRITZENDE SELBSTZÜNDENDE BRENNKRAFTMASCHINE**

(30) Priorität: 10.07.2015 AT 4352015
(71) Anmelder: Waldland Naturstoffe GmbH, 3533 Friedersbach (AT)
(72) Erfinder: SPANDL, Stefan, 2011 Sierndorf (AT)
(74) Vertreter: Oberhardt, Knut

(57) **Zusammenfassung**

Die Erfindung geht aus von einer direkteinspritzenden selbstzündenden Brennkraftmaschine, die mit einem Kraftstoff mit niedrigem Zündpunkt und mit einem Kraftstoff mit höherem Zündpunkt betreibbar ist, mit wenigstens einem Injektor (1) zum Einspritzen von Kraftstoff mit einem Servoventil (2, 16), welches durch eine Magnetspule (13) oder einen Piezostapel betätigbar ist und mit einer elektronischen Steuerung, in der unterschiedliche Steuerungsparameter für den Betrieb mit dem Kraftstoff mit niedrigem Zündpunkt und den Betrieb mit dem Kraftstoff mit höherem Zündpunkt hinterlegt sind. Erfindungsgemäß sind in der elektronischen Steuerung Steuerungsparameter (29, 30, 31, 32) für die elektrische Energie zur Ansteuerung der Magnetspule (13) oder des Piezostapels hinterlegt, wobei die elektrische Energie für den Kraftstoff mit dem höheren Zündpunkt gegenüber dem Kraftstoff mit dem niedrigen Zündpunkt zwischen 10 und 80% erhöht ist.

## Beschreibung

Die Erfindung betrifft eine direkteinspritzende selbstzündende Brennkraftmaschine nach dem Oberbegriff von Anspruch 1.

Aufgrund der Verknappung von Erdöl und aus Gründen des Umweltschutzes sind Motoren bekannt geworden, die mit Pflanzenöl oder anderen aus Pflanzenöl gewonnenen Kraftstoffen betrieben werden können. Die alten Vor- und Wirbelkammermotoren konnten so abgeändert werden, dass sie im so genannten Ein-Tank-System für den Betrieb mit Pflanzenöl geeignet waren. Diese Motoren konnten nach der Anpassung auf den Pflanzenölbetrieb jedoch weiterhin auch mit Dieselkraftstoff betrieben werden.

Bei den direkteinspritzenden Dieselmotoren, die insbesondere mit Common-Rail-Technik arbeiten, sind die Parameter für die Motorsteuerung so auf einen einzigen Kraftstoff optimiert, dass ein Betrieb mit einem alternativen Kraftstoff praktisch nicht mehr möglich ist. Dies ist zurückzuführen auf die doch sehr unterschiedlichen Eigenschaften von Pflanzenöl und Dieselkraftstoff. Während Dieselkraftstoff beispielsweise über einen beachtlichen Temperaturbereich keine Viskositätsänderung zeigt, ist Pflanzenöl bei tieferen Temperaturen doch sehr zähflüssig. Weiterhin handelt es sich bei Pflanzenöl um einen Kraftstoff, dessen Zündpunkt erheblich höher liegt als der Zündpunkt von Dieselkraftstoff.

Das bedeutet, dass bei Pflanzenöl diejenige Temperatur, auf die man das Pflanzenöl erhitzen muss, damit es sich in Gegenwart von Luftsauerstoff ohne Zündquelle, ausschließlich aufgrund seiner Erhitzung, selbst entzündet, wesentlich höher liegt als bei Dieselkraftstoff. Der Zündpunkt von Dieselkraftstoff liegt bei ca. 220°C, während der Zündpunkt von Pflanzenöl - abhängig von der Sorte - bei etwa 300°C liegt.

Diese Unterschiede führen dazu, dass bei modernen Motoren, die auf Leistung und Abgasverhalten optimiert sind, bei Verwendung dieser unterschiedlichen Treibstoffe auch mit unterschiedlichen Motorsteuerungsparametern operiert werden muss. Dies würde bedeuten, dass ein Motor, der einmal an den Betrieb mit Pflanzenöl angepasst ist, nicht mehr mit Dieselkraftstoff zu betreiben ist. Da europaweit jedoch keine flächendeckende Versorgung mit Pflanzenöl gewährleistet ist, würde dies einen enormen Komfortverlust bedeuten. Die weitere Marktdurchsetzung mit Pflanzenölmotoren wäre daher stark in Frage gestellt.

Gerade im landwirtschaftlichen Bereich ist es aber auch heute noch nicht abschätzbar, wie sich der Preis für Pflanzenöl zukünftig entwickeln wird. Da landwirtschaftliche Maschinen aber in den meisten Fällen auf eine sehr lange Lebensdauer ausgelegt sind, wäre in diesem Bereich eine ausschließlich mit Pflanzenöl betreibbare Maschine nicht in größeren Stückzahlen verkaufbar.

Es hat sich herausgestellt, dass es bei modernen selbstzündenden Brennkraftmaschinen, beispielsweise bei Brennkraftmaschinen mit Common-Rail-Technik, zu Startschwierigkeiten kommen kann, wenn die Temperatur im Winter stark abfällt. Dies gilt ganz besonders, wenn alternative Kraftstoffe wie Pflanzenöl oder entsprechende Gemische mit hohem Zündpunkt und hoher Viskosität bei niedrigen Temperaturen verwendet werden. Bei dieser Problematik kann aber auch die Verschiebung des Einspritzzeitpunkts nur bedingt helfen.

Es wurde bereits versucht, den Kraftstoff vor der Einspritzung über Wärmetauscher aus dem Kühlkreislauf des Motors zu erwärmen. Diese Maßnahme hat sich zwar nach dem Start als wirkungsvoll erwiesen, konnte die Startprobleme aber nicht mindern, da für die Startphase noch kein angewärmter Kraftstoff zur Verfügung steht.

Es wurde auch bereits versucht, den Kraftstoff elektrisch vorzuheizen, indem die Kraftstoffleitung vor der Hochdruckpumpe mit einer elektrischen Heizmanschette umwickelt wurde. Auf diese Weise konnten Erfolge bei der Startfähigkeit erzielt werden, es hat sich jedoch herausgestellt, dass sehr lange Vorheizzeiten benötigt werden und die Batterie damit sehr stark belastet wird.

Auch andere Heiz-Lösungen werden oftmals als zu umständlich und zu teuer angesehen und aus diesen Gründen abgelehnt.

Der Erfindung liegt die Aufgabe zugrunde, eine direkteinspritzende selbstzündende Brennkraftmaschine so weiterzubilden, dass sie sowohl mit einem Kraftstoff mit niedrigem Zündpunkt - insbesondere Pflanzenöl oder einem aus Pflanzenöl gewonnenen Kraftstoff - als auch mit Dieselkraftstoff betrieben werden kann und mit beiden Kraftstoffen ohne aufwändige Maßnahmen auch bei tiefen Temperaturen gestartet werden kann.

Gelöst wird die Aufgabe gemäß der Erfindung durch eine direkteinspritzende selbstzündende Brennkraftmaschine mit den Merkmalen von Anspruch 1. Erfindungsgemäß sind in der elektronischen Steuerung Steuerungsparameter für die elektrische Energie zur Ansteuerung der Magnetspule oder des Pieszostapels für die Aktivierung des Servoventils hinterlegt, wobei die elektrische Energie für den Kraftstoff mit dem höheren Zündpunkt gegenüber dem Kraftstoff mit dem niedrigen Zündpunkt zwischen 10 und 80% erhöht ist. Durch die Erhöhung der elektrischen Energie zur Ansteuerung der Magnetspule oder des Piezostapels wird ein Ausgleich zu der unterschiedlichen Viskosität der beiden Kraftstoffe geschaffen. Um etwa die gleiche Zeit zum Öffnen des Servoventils realisieren zu können, wird die elektrische Energie bei der Umstellung auf einen Kraftstoff mit hohem Zündpunkt und hoher Viskosität angehoben, aber bei einer Umstellung auf einen Kraftstoff mit niedrigem Zündpunkt und geringer Viskosität auch wieder abgesenkt. Durch diese Absenkung wird eine Beschädigung des Servoventils und der Magnetspule oder des Piezostapels verhindert.

Unter der elektrischen Energie soll hier die Energie verstanden werden, die bei einem Einspritzzyklus zur Bestromung der Magnetspule oder des Piezostapels verwendet wird. Da von einer konstanten anliegenden Spannung ausgegangen werden kann, sind für die Menge der elektrischen Energie hauptsächlich die Stromstärke, insbesondere die maximal von der Steuerung zur Verfügung gestellte Stromstärke, und die Zeitspanne, über die die Magnetspule oder der Piezostapel bestromt wird, verantwortlich. Hierbei ist die Zeitspanne gemeint, die benötigt wird um das Servoventil in seine aktive Stellung zu bringen. Zum Halten des Servoventils in seiner aktiven Stellung ist dagegen keine Unterscheidung zwischen den beiden Kraftsoffen notwendig.

Weitere Einzelheiten und Vorteile der Erfindung ergeben sich aus den Unteransprüchen.

Um das Servoventil über die Magnetspule oder den Piezostapel betätigen zu können, ist ein höherer Strom notwendig, als um das Servoventil in der betätigten Stellung zu halten. Da zur Betätigung des Servoventils Teile davon durch den Kraftstoff bewegt werden müssen, muss hierfür eine Kraft auf die zu bewegenden Teile aufgebracht werden. Befindet sich das Servoventil dagegen erst in seiner betätigten Stellung, so muss nur noch die Rückstellkraft des Servoventils kompensiert werden. Die Bestromung für die Magnetspule oder den Piezostapel weist deshalb vorteilhaft ein erstes höheres Niveau als Anzugsstrom und ein zweites tieferes Niveau als Haltestrom auf.

Die Rückstellkraft des Servoventils ist unabhängig von der verwendeten Kraftstoffart. Der Haltestrom, der aufgebracht werden muss, um die Rückstellkraft des Servoventils zu kompensieren, muss deshalb nicht in Abhängigkeit von der verwendeten Kraftstoffart geändert werden. Bei einem Ausführungsbeispiel der Erfindung ist jedoch zur Ansteuerung der Magnetspule oder des Piezostapels für den Kraftstoff mit dem höheren Zündpunkt gegenüber dem Kraftstoff mit dem niedrigen Zündpunkt die Amplitude des Anzugsstrom zwischen 10 und 20% erhöht. Auf diese Weise wird bei Verwendung des Kraftstoffes mit dem höheren Zündpunkt auf das Servoventil eine höhere Kraft ausgeübt, die sicherstellt, dass das Servoventil auch durch einen sehr zähen Kraftstoff bewegt wird.

Es ist unter Umständen auch möglich, dass dem Servoventil bei Verwendung des Kraftstoffes mit dem höheren Zündpunkt mehr Zeit eingeräumt werden kann, um die aktivierte Stellung zu erreichen. Bei einem anderen Ausführungsbeispiel ist deshalb zur Ansteuerung der Magnetspule oder des Piezostapels für den Kraftstoff mit dem höheren Zündpunkt gegenüber dem Kraftstoff mit dem niedrigen Zündpunkt die Bestromung der Magnetspule oder des Piezostapels mit dem Anzugsstrom zwischen 30 und 100% verlängert. Mit der Bestromung der Magnetspule oder des Piezostapels ist hier also nur der Zeitraum gemeint, in dem die Magnetspule oder der Piezostapel mit dem Anzugsstrom bestromt wird. Selbstverständlich ist aber auch eine Kombination der beiden Varianten möglich. In diesem Fall wird bei Verwendung des Kraftstoffes mit dem höheren Zündpunkt der Zeitraum für den Anzugsstrom verlängert und gleichzeitig die Amplitude des Anzugsstroms erhöht.

Es hat sich herausgestellt, dass sehr gute Ergebnisse erzielt werden können, wenn zur Ansteuerung der Magnetspule oder des Piezostapels für den Kraftstoff mit dem höheren Zündpunkt gegenüber dem Kraftstoff mit dem niedrigen Zündpunkt die Bestromung der Magnetspule oder des Piezostapels mit dem Anzugsstrom zwischen 30 und 50% verlängert ist. Hierbei wird in Kauf genommen, dass das Servoventil eine längere Zeitspanne benötigt, um in seine aktive Stellung zu gelangen. Andererseits muss aber die Amplitude des Anzugsstroms nicht zu stark erhöht werden. Auf diese Weise kann die Magnetspule oder der Piezostapel geschont und eine Beschädigung vermieden werden.

Üblicherweise besitzen Kraftstoffe mit höherem Zündpunkt nur bei tiefen Temperaturen eine hohe Viskosität. So ist beispielsweise die Viskosität bei den meisten Sorten von Pflanzenölkraftstoffen und bei Dieselkraftstoff bei höheren Temperaturen nahezu identisch. Eine Erhöhung der Energie zur Ansteuerung der Magnetspule oder des Piezostapels bei der Verwendung von Kraftstoff mit hohem Zündpunkt ist aus diesem Grund normalerweise nur bei tieferen Temperaturen notwendig. Es ist deshalb vorteilhaft eine Grenztemperatur festgelegt, oberhalb der die Steuerungsparameter für die elektrische Energie zur Ansteuerung der Magnetspule oder des Piezostapels für beide Kraftstoffe identisch sind.

Die meisten Pflanzenölkraftstoffe verhalten sich bezüglich ihrer Viskosität oberhalb einer bestimmten Temperatur ähnlich wie Dieselkraftstoff. Dies gilt sogar für Kraftstoffe auf Basis hochviskoser Pflanzenöle. Vorteilhaft ist deshalb die Grenztemperatur auf eine Temperatur - abhängig von dem verwendeten Kraftstoff mit hohem Zündpunkt - in dem Bereich zwischen 25 und 50°C festgelegt.

Pflanzenöle, die sehr häufig die Basis für Kraftstoffe bilden, sind beispielsweise Raps- oder Sonnenblumenöl. Solche Kraftstoffe verhalten sich bereits bei einer Temperatur von 30°C hinsichtlich ihrer Viskosität ähnlich wie Dieselkraftstoff. Es ist deshalb besonders vorteilhaft die Grenztemperatur auf 30°C festgelegt.

Die Problematik bei Kraftstoffen mit höherem Zündpunkt wird zumindest zum Teil durch die höhere Viskosität bei tiefen Temperaturen hervorgerufen. Die Viskosität des verwendeten Kraftstoffes kann über seine Temperatur ermittelt werden. Es ist deshalb vorteilhaft, dass die Grenztemperatur für die Temperatur des Kraftstoffs direkt vor dem Injektor gilt.

Andererseits wird bei Serien-Brennkraftmaschinen die Temperatur des Kraftstoffes üblicherweise an anderen, ganz unterschiedlichen Stellen gemessen. Es müsste folglich ein zusätzlicher Temperatursensor im Kraftstoffkreislauf vor dem Injektor vorgesehen werden. Um solche zusätzliche Hardware zu vermeiden, ist es sinnvoll eine andere Temperatur zu verwenden, die aber einen Rückschluss auf die Kraftstofftemperatur zulässt. Vorteilhaft wird die Grenztemperatur deshalb auf die Temperatur des Kühlmittels angewandt.

Weitere Einzelheiten und Vorteile der Erfindung ergeben sich aus der Beschreibung eines Ausführungsbeispiels, das anhand der Zeichnung eingehend erläutert wird.

Es zeigt:
- Fig. 1: eine schematische Darstellung des Verlaufs des Anzugsstroms für Diesel- und für Pflanzenölkraftstoff in einem ersten Ausführungsbeispiel der Erfindung,
- Fig. 2: eine schematische Darstellung des Verlaufs des Anzugsstroms für Diesel- und für Pflanzenölkraftstoff in einem weiteren Ausführungsbeispiel der Erfindung,
- Fig. 3: einen Injektor, wie er zum Einsatz in einer erfindungsgemäßen Brennkraftmaschine geeignet ist und
- Fig. 4: ein Verfahren zum Starten einer erfindungsgemäßen Brennkraftmaschine.

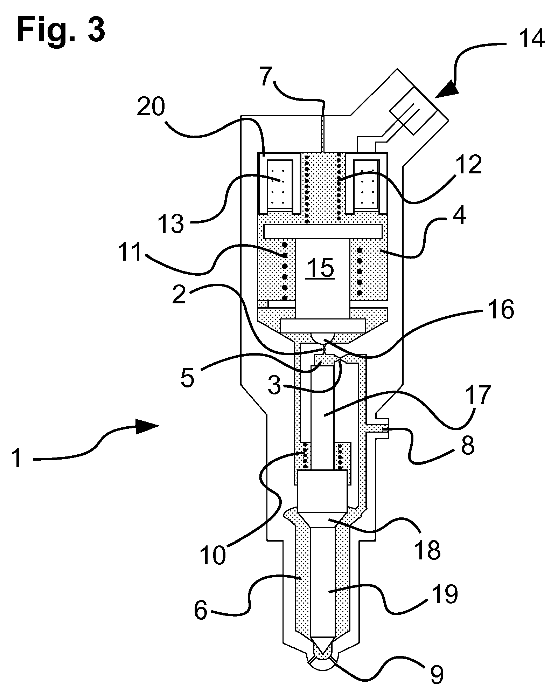

Die in Fig. 3 dargestellte Einspritzdüse ist als elektromagnetischer Injektor 1 ausgebildet. Da sich ein elektromagnetischer und ein piezoelektrischer Injektor in ihrer Wirkungsweise stark ähneln, soll hier nur näher auf den elektromagnetischen Injektor eingegangen werden. In dem Injektor 1 ist eine Anzahl von Hohlräumen vorgesehen, die alle miteinander in Verbindung stehen. Der Leckageraum 4 ist direkt an den Rücklauf 7 in den Kraftstofftank oder andere niederdruckführende Leitungen angeschlossen. Unterhalb des Leckageraums 4 befindet sich der Ventilsteuerraum 5. Dieser ist über die Ablaufdrossel 2 mit dem Leckageraum 4 verbunden.

Über die Zulaufdrossel 3 ist der Ventilsteuerraum 5 an den Hochdruckzulauf 8 angeschlossen. Ebenfalls steht mit dem Hochdruckzulauf 8 das Kammervolumen 6 in Verbindung.

Bei geöffnetem Injektor 1 wird der Inhalt des Kammervolumens 6 über die Spritzlöcher 9 in den hier nicht dargestellten Brennraum eingespritzt. Der Hohlraum um die Düsenfeder 10, der sich mit Leckagekraftstoff aus dem Kammervolumen 6 und dem Ventilsteuerraum 5 füllt, ist über eine Bohrung ebenfalls an den Leckageraum 4 angeschlossen.

In dem Leckageraum 4 befindet sich ein elektromagnetisches Ventil zum Verschließen der Ablaufdrossel 2. Dieses elektromagnetische Ventil weist eine Magnetspule 13, einen topfförmigen Spulenkern 20, eine Ventilfeder 12, eine Ankerfeder 11 und den Anker 15 auf. An der unteren Platte des Ankers 15 ist die Ventilkugel 16 zum Verschließen der Ablaufdrossel 2 angebracht. Die Ablaufdrossel 2 bildet zusammen mit der Ventilkugel 16 des elektromagnetischen Ventil ein Servoventil. Die Magnetspule 13 ist mit der Anschlussbuchse 14 verbunden. Über die Anschlussbuchse 14 wird ein elektrisches Steuergerät angeschlossen, mit dem die zum ordnungsgemäßen Betrieb des Injektors 1 notwendigen elektrischen Impulse erzeugt werden.

Im unteren Bereich des Injektors 1 befindet sich die Düsennadel 19, mit der das Kammervolumen 6 gegen die Spritzlöcher 9 verschlossen wird. Nach oben setzt sich die Düsennadel 19 über die Druckschulter 18 in den Steuerkolben 17 fort. Die obere Stirnfläche des Steuerkolbens 17 bildet die untere Begrenzungswand des Ventilsteuerraumes 5.

In der gezeigten Darstellung befindet sich der Injektor 1 in geschlossenem Zustand. Dabei ist die Magnetspule 13 nicht bestromt und die Ventilfeder 12 drückt den Anker 15 in seine unterste Stellung. Die Ventilkugel 16 verschließt dabei die Ablaufdrossel 2. Über den Hochdruckzulauf 8 und die Zulaufdrossel 3 herrscht in dem Ventilsteuerraum 5 der auch am Hochdruckzulauf 8 anliegende Druck. Dieser Druck wirkt folglich auch auf die obere Stirnfläche des Steuerkolbens 17.

Der gleiche Druck herrscht in dem Kammervolumen 6. Hier wirkt der Druck des Kraftstoffs auf die Druckschulter 18. Da deren in Achsrichtung der Düsennadel 19 projizierte Fläche kleiner ist als die Stirnfläche des Steuerkolbens 17, ist die Druckkraft auf die Druckschulter 18 in Öffnungsrichtung kleiner als die Druckkraft auf den Steuerkolben 17 in Schließrichtung. In Schließrichtung wirkt zusätzlich die Kraft der Düsenfeder 10. Hierdurch wirkt eine resultierende Kraft, welche die Düsennadel 19 in geschlossener Stellung hält.

Soll nun Kraftstoff in den hier nicht dargestellten Brennraum über die Spritzlöcher 9 eingespritzt werden, wird die Magnetspule 13 entsprechend bestromt. Dabei wird die obere Platte des Ankers 15 von der Magnetspule 13 und dem das Magnetfeld verstärkenden Spulenkern 20 angezogen, wobei sich der Anker 15 gegen die Kraft der Ventilfeder 12 hebt.

Die Ventilkugel 16 hebt von der Ablaufdrossel 2 ab und gibt die Verbindung zwischen dem Ventilsteuerraum 5 und dem Leckageraum 4 frei. Es kann nun Kraftstoff aus dem Ventilsteuerraum 5 austreten, wodurch der hohe Druck in diesem Raum nachlässt. Dadurch verändert sich das Verhältnis der auf den Steuerkolben 17 wirkenden Kräfte. Da der Druck auf die Druckschulter 18 unverändert bleibt, sich aber der Druck auf die obere Stirnfläche des Steuerkolbens 17 verringert, bewegt sich die Düsennadel 19 nach oben und gibt die Spritzlöcher 9 frei.

Zum Schließen des Injektors 1 wird die Magnetspule 13 wieder stromlos geschaltet. Die Ventilfeder 12 drückt nun den Anker 15 wieder in seine untere Stellung, in der die Ventilkugel 16 die Ablaufdrossel 2 verschließt. Über die Zulaufdrossel 3 baut sich im Ventilsteuerraum 5 sehr schnell wieder der an dem Hochdruckzulauf 8 anliegende Druck auf. Der Steuerkolben 17 und die damit verbundene Düsennadel 19 werden wieder nach unten gedrückt und verschließen die Spritzlöcher 9. Damit kann kein Kraftstoff aus dem Kammervolumen 6 mehr in den Brennraum austreten.

Nach einer längeren Betriebspause bei geringer Umgebungstemperatur kühlt auch der Kraftstoff in den miteinander in Verbindung stehenden Hohlräumen des Injektors 1 ab. Abhängig von der verwendeten Kraftstoffart kann dessen Viskosität ansteigen. Bei der Verwendung von Dieselkraftstoff ergibt sich dadurch kein Problem, da dieser über einen großen Temperaturbereich eine fast unveränderte Viskosität aufweist.

Wird dagegen als Kraftstoff beispielsweise Pflanzenöl verwendet, kann dies bei niedrigen Temperaturen zu Problemen führen. Die dann hochviskose Flüssigkeit behindert die Bewegung des Ankers 15, der das Servoventil 2, 16 zwischen dem Ventilsteuerraum 5 und dem Leckageraum 4 betätigt und blockier damit unter Umständen den Servomechanismus zur Steuerung des Injektors 1. Ein Einspritzvorgang könnte dadurch unmöglich werden, oder zumindest stark behindert werden. Erfindungsgemäß sind daher in der Steuerung für solche Kraftstoffe mit höherem Zündpunkt andere Parameter zur Ansteuerung der Magnetspule hinterlegt.

Der Anzugsstrom, mit dem die Magnetspule 13 bestromt wird, um den Anker 15 mit der Ventilkugel 16 in eine Stellung zu bewegen, in der das Servoventil 2, 16 geöffnet ist, ist grundsätzlich in zwei Bereiche aufgeteilt: der Anzugsstrom muss so groß sein, dass der Anker in einer bestimmten Zeit durch den Kraftstoff in die geöffnete Stellung des Servoventils 2, 16 bewegt werden kann, während der Haltestrom nur die Kraft der Ventilfeder 12 kompensieren und das Servoventil 2, 16 in seiner geöffneten Stellung halten muss.

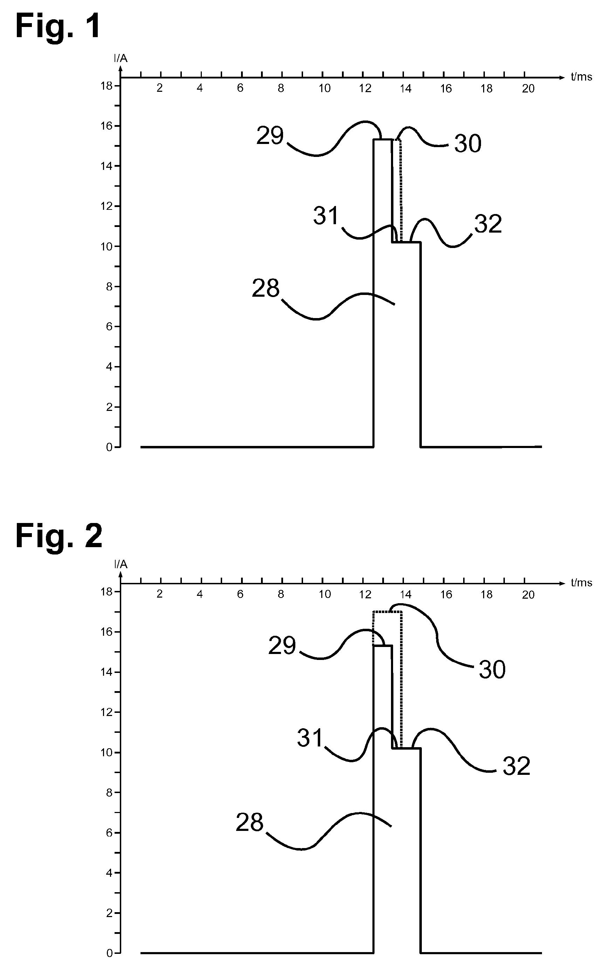

In Fig. 1 ist die Bestromung der Magnetspule für ein erstes Ausführungsbeispiel der Erfindung dargestellt. In dem gezeigten Diagramm ist mit dem Bezugszeichen 28 die Magnetspulenbestromung bezeichnet. Die Fläche unterhalb der durchgezogenen bzw. der gestrichelten Linie bezieht sich dementsprechend auf die Energie, die zur Bestromung der Magnetspule 13 verwendet wird.

Bei dem gezeigten Beipiel wird die Amplitude des Anzugsstroms bei einem Kraftstoffwechsel nicht verändert. Verändert wird lediglich der Zeitraum, über den die Magnetspule 13 mit dem Anzugsstrom bestromt wird. Der Anzugsstrom 29 für Dieselkraftstoff liegt also für einen kleineren Zeitraum an der Magnetspule 13 an als der Anzugsstrom 30 für Pflanzenölkraftstoff. Die Gesamtzeit der Bestromung bleibt dagegen unverändert. Es ändert sich demzufolge auch der Zeitraum für den Haltestrom, wobei der Haltestrom 31 für Dieselkraftstoff kürzer als der Haltestrom 32 für Pflanzenölkraftstoff anliegt.

Die Differenz der Anliegezeiten der Halteströme ist die gleiche wie die Differenz der Anliegezeiten der Anzugsströme, lediglich mit umgekehrten Vorzeichen. Die Bestromung der Magnetspule 13 mit dem Anzugsstrom wird hier um ca. 30% verlängert.

Bei diesem Ausführungsbeispiel benötigt der Anker 15 etwas mehr Zeit um sich durch den zäheren Pflanzenölkraftstoff zu bewegen. Die Amplitude des Anzugsstroms muss aber nicht erhöht werden, da die etwas verlängerte Öffnungszeit des Servoventils 2, 16 noch nicht zu Problemen führt. Der Anzugsstrom muss lediglich etwas verlängert werden, um gewährleisten zu können, dass das Servoventil 2, 16 während des Zeitraum, in dem der Anzugsstrom anliegt, sicher in seine geöffnete Stellung bewegt wird.

Bei vielen Pflanzenölkraftstoffen und vielen Motortypen ist dies Änderung ausreichend. Sie ist besonders schonend für die Magnetspule 13, da kein höherer Anzugsstrom angelegt werden muss. Durch die Verlängerung der Anzugszeit wird lediglich die zur Ansteuerung der Magnetspule verwendete Energie erhöht.

Fig. 2 zeigt ein anderes Ausführungsbeispiel der Erfindung. Hier wird nicht nur die Anzugszeit verlängert, sondern es wird zusätzlich die Amplitude des Anzugsstroms 30 für den Pflanzenölkraftstoff gegenüber der Amplitude des Anzugsstroms 29 für Dieselkraftstoff erhöht. Die Amplitude de Anzugsstroms wird hier um ca. 12% erhöht. Die Gesamtzeit für die Bestromung der Magnetspule 13 ist wiederum gleich. Auch die Amplitude des Haltestroms 31, 32 ist gleich, da sich die Rückstellkraft der Ventilfeder 12 bei einem Kraftstoffwechsel nicht ändert.

Bei diesem Ausführungsbeispiel verlangsamt sich die Bewegung des Ankers 15 bei der Verwendung von Pflanzenölkraftstoff trotz einer Erhöhung der Amplitude des Anzugsstroms. Aber auch hier kann durch die beschriebenen Maßnahmen sichergestellt werden, dass das Servoventil 2, 16 rechtzeitig in seine geöffnete Stellung bewegt wird. Auch ist eine Erhöhung des nur kurzzeitig auf die Magnetspule 13 wirkenden Anzugsstroms um ca. 12% tolerierbar und es kann gewährleistet werden, dass die Magnetspule 13 dabei keinen Schaden nimmt.

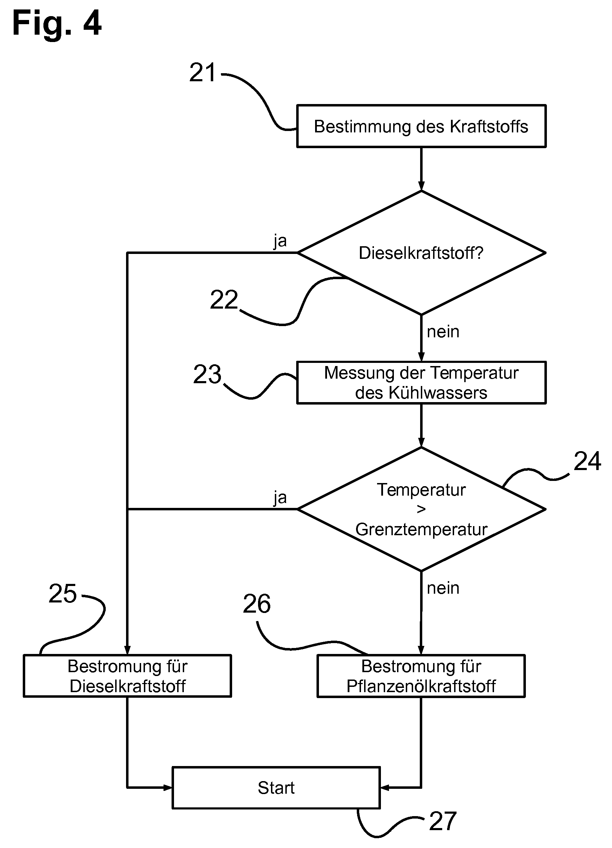

In Fig. 4 ist ein Ablaufschema für den Start einer erfindungsgemäßen Brennkraftmaschine skizziert. In Schritt 22 wird ermittelt, welcher Kraftstoff verwendet wird. Im einfachsten Fall, ist hier eine Eingabe des Nutzers der Brennkraftmaschine gefordert. Diese Eingabe muss nicht unbedingt vor dem Start erfolgen; die Kraftstoffart kann auch beispielsweise nach dem Befüllen des Kraftstofftanks eingegeben und abgespeichert. In diesem Fall wird vor dem Start lediglich der Speicher ausgelesen.

Selbstverständlich ist aber auch eine automatische Ermittlung der verwendeten Kraftstoffart möglich. Hierzu muss eine Sensorik vorgesehen werden, die mit der Steuerung in Verbindung steht. Auf die Art der Kraftstoffermittlung soll hier nicht weiter eingegangen werden, da sie sich nicht maßgeblich auf die erfindungsgemäße Brennkraftmaschine auswirkt.

Bei dem gezeigten Ausführungsbeispiel soll für die Art und Weise der Bestromung der Magnetspule 13 nicht nur die Kraftstoffart, sondern auch die Temperatur des Kühlwassers ausschlaggebend sein. Im Falle einer längeren Standzeit der Brennkraftmaschine gibt die Kühlwassertemperatur Aufschluss über die Außentemperatur, im Falle einer nur kurzen Betriebsunterbrechung, Aufschluss über die Motortemperatur. In jedem Fall kann folglich in etwa von der Kühlwassertemperatur auf die Temperatur des im Injektor 1 anstehenden Kraftstoffs geschlossen werden.

In Schritt 24 werden die Temperatur des Kühlwassers und die in der Steuerung abgelegte Grenztemperatur mit einander verglichen. Ist eine Grenztemperatur von 30°C festgelegt, wird folglich ermittelt ob diese Grenztemperatur überschritten ist, oder ob die Kühlwassertemperatur 30°C oder weniger beträgt.

In Schritt 25 werden die Parameter für die Bestromung der Magnetspule 13 für den Betrieb der Brennkraftmaschine mit Dieselkraftstoff geladen, in Schritt 26 die Parameter für den Betrieb der Brennkraftmaschine mit Pflanzenölkraftstoff. In Schritt 27 wird die Brennkraftmaschine gestartet.

Wird die Brennkraftmaschine mit Dieselkraftstoff betrieben, so muss beim Startvorgang gegenüber einer herkömmlichen Brennkraftmaschine praktisch nichts geändert werden. Der einzige Unterschied liegt in der Abfrage nach dem verwendeten Kraftstoff. Ansonsten werden die für Dieselkraftstoff üblichen Werte für die Bestromung der Magnetspule 13 geladen und die Brennkraftmaschine gestartet.

Da sich Pflanzenölkraftstoff bei verschiedenen Temperaturen unterschiedlich verhält, wird bei der Verwendung von Pflanzenölkraftstoff nach der Abfrage der Kraftstoffart zuerst noch die Temperatur des Kühlwassers festgestellt und mit der hinterlegten Grenztemperatur verglichen. Übersteigt die Temperatur des Kühlwassers die Grenztemperatur, verhält sich der Pflanzenölkraftstoff ähnlich wie Dieselkraftstoff. In diesem Fall werden in Schritt 25 deshalb die gleichen Parameter für die Bestromung der Magnetspule 13 geladen wie bei der Verwendung von Dieselkraftstoff.

Entspricht die Temperatur des Kühlwassers jedoch höchstens der hinterlegten Grenztemperatur, muss davon ausgegangen werden, dass es mit den Parametern für Dieselkraftstoff zu Problemen beim Startvorgang kommen würde. Es werden deshalb die Parameter für die Bestromung der Magnetspule 13 bei der Verwendung von Pflanzenölkraftstoff in Schritt 26 geladen, bevor die Brennkraftmaschine in Schritt 27 gestartet wird. Auf diese Weise gelingt der Start mit Pflanzenölkraftstoff auch bei niedrigen Temperaturen problemlos.

**Bezugszeichenliste:**

| | | | |
|---|---|---|---|
| 1 | Injektor | 19 | Düsennadel |
| 2 | Ablaufdrossel | 20 | Spulenkern |
| 3 | Zulaufdrossel | 21 | Bestimmung des Kraftstoffes |
| 4 | Leckageraum | 22 | Entscheidung über den Kraftstoff |
| 5 | Ventilsteuerraum | 23 | Ermittlung der Kühlwassertemperatur |
| 6 | Kammervolumen | 24 | Ermittlung, ob Grenztemperatur erreicht ist |
| 7 | Rücklauf | | |
| 8 | Hochdruckzulauf | 25 | Abfrage der Bestromung der Magnetspule für Dieselkraftstoff |
| 9 | Spritzlöcher | | |
| 10 | Düsenfeder | 26 | Abfrage der Bestromung der Magnetspule für Pflanzenölkraftstoff |
| 11 | Ankerfeder | | |
| 12 | Ventilfeder | 27 | Start der Brennkraftmaschine |
| 13 | Magnetspule | 28 | Magnetspulenbestromung |
| 14 | Anschlussbuchse | 29 | Anzugsstrom für Dieselkraftstoff |
| 15 | Anker | 30 | Anzugsstrom für Pflanzenölkraftstoff |
| 16 | Ventilkugel | 31 | Haltestrom für Dieselkraftstoff |
| 17 | Steuerkolben | 32 | Haltestrom für Pflanzenölkraftstoff |
| 18 | Druckschulter | | |

## Patentansprüche

1. Direkteinspritzende selbstzündende Brennkraftmaschine, die mit einem Kraftstoff mit niedrigem Zündpunkt und mit einem Kraftstoff mit höherem Zündpunkt betreibbar ist, mit wenigstens einem Injektor (1) zum Einspritzen von Kraftstoff mit einem Servoventil (2, 16), welches durch eine Magnetspule (13) oder einen Piezostapel betätigbar ist und mit einer elektronischen Steuerung, in der unterschiedliche Steuerungsparameter für den Betrieb mit dem Kraftstoff mit niedrigem Zündpunkt und den Betrieb mit dem Kraftstoff mit höherem Zündpunkt hinterlegt sind, **dadurch gekennzeichnet, dass** in der elektronischen Steuerung Steuerungsparameter (29, 30, 31, 32) für die elektrische Energie zur Ansteuerung der Magnetspule (13) oder des Piezostapels für die Aktivierung des Servoventils (2, 16) hinterlegt sind, wobei die elektrische Energie für den Kraftstoff mit dem höheren Zündpunkt gegenüber dem Kraftstoff mit dem niedrigen Zündpunkt zwischen 10 und 80% erhöht ist.

2. Direkteinspritzende selbstzündende Brennkraftmaschine nach Anspruch 1, **dadurch gekennzeichnet, dass** die Bestromung für die Magnetspule (13) oder für den Piezostapel ein erstes höheres Niveau als Anzugsstrom (29, 30) und ein zweites tieferes Niveau als Haltestrom (31, 32) aufweist.

3. Direkteinspritzende selbstzündende Brennkraftmaschine nach einem der Ansprüche 1 bis 2, **dadurch gekennzeichnet, dass** zur Ansteuerung der Magnetspule (13) oder des Piezostapels für den Kraftstoff mit dem höheren Zündpunkt gegenüber dem Kraftstoff mit dem niedrigen Zündpunkt die Amplitude des Anzugsstroms (29, 30) zwischen 10 und 20% erhöht ist.

4. Direkteinspritzende selbstzündende Brennkraftmaschine nach einem der Ansprüche 1 bis 3, **dadurch gekennzeichnet, dass** zur Ansteuerung der Magnetspule (13) oder des Piezostapels für den Kraftstoff mit dem höheren Zündpunkt gegenüber dem Kraftstoff mit dem niedrigen Zündpunkt die Bestromung der Magnetspule (13) mit dem Anzugsstrom (29, 30) zwischen 30 und 100% verlängert ist.

5. Direkteinspritzende selbstzündende Brennkraftmaschine nach Anspruch 4, **dadurch gekennzeichnet, dass** zur Ansteuerung der Magnetspule oder des Pieszostapels für den Kraftstoff mit dem höheren Zündpunkt gegenüber dem Kraftstoff mit dem niedrigen Zündpunkt die Bestromung der Magnetspule mit dem Anzugsstrom (29, 30) zwischen 30 und 50% verlängert ist.

6. Direkteinspritzende selbstzündende Brennkraftmaschine nach einem der Ansprüche 1 bis 5, **dadurch gekennzeichnet, dass** eine Grenztemperatur festgelegt ist, oberhalb der die Steuerungsparameter für die elektrische Energie zur Ansteuerung der Magnetspule für beide Kraftstoffe identisch sind.

7. Direkteinspritzende selbstzündende Brennkraftmaschine nach Anspruch 6, **dadurch gekennzeichnet, dass** die Grenztemperatur auf eine Temperatur in dem Bereich zwischen 25 und 50°C festgelegt ist.

8. Direkteinspritzende selbstzündende Brennkraftmaschine nach Anspruch 7, **dadurch gekennzeichnet, dass** die Grenztemperatur auf 30°C festgelegt ist.

9. Direkteinspritzende selbstzündende Brennkraftmaschine nach einem der Ansprüche 6 bis 8, **dadurch gekennzeichnet, dass** die Grenztemperatur für die Temperatur des Kraftstoffs gilt.

10. Direkteinspritzende selbstzündende Brennkraftmaschine nach einem der Ansprüche 6 bis 8, **dadurch gekennzeichnet, dass** die Grenztemperatur für die Temperatur des Kühlmittels gilt.
